# EUROPEAN PATENT SPECIFICATION

(11) **EP 4 733 206 B1**
(45) Date of publication and mention of the grant of the patent: **09.09.2026**
(21) Application number: 24383163.3
(22) Date of filing: 22.10.2024
(51) Int. Cl.: B65B 51/30, B65B 9/02, B65B 35/24, B65B 41/16, B65B 61/06, B29C 65/02, B29C 65/74, B29C 65/78, B29C 65/00, B65B 25/14, B65G 21/14, B29C 65/18, B29C 65/30

(54) **PRODUCT WRAPPING MACHINE AND OPERATION METHOD**
PRODUKTEINWICKELMASCHINE UND BETRIEBSVERFAHREN
MACHINE D'EMBALLAGE DE PRODUITS ET PROCÉDÉ DE FONCTIONNEMENT

(43) Date of publication of application: 29.04.2026
(73) Proprietor: Ulma Packaging, S.Coop., 20560 Oñati (ES)
(72) Inventor: SANCHEZ MUGICA, Ion, 20560 Oñati (ES); CALVO MARTIN, Alberto, 20560 Oñati (ES); MAKIBAR PUENTE, Xabier, 20560 Oñati (ES)
(74) Representative: Galbaian S.Coop.

(56) References cited:
- EP-B1- 0 304 979
- US-A- 3 618 740
- US-A1- 2010 263 336
- US-A1- 2021 187 871

## Description

### TECHNICAL FIELD

The present invention relates to product wrapping machines and operation methods of such machines.

### PRIOR ART

Different types of packaging machines are known for packaging products. Some types of machines are known as wrapping machines, with which the product is wrapped. In this type of machines, a film is arranged as a vertical curtain, and the advance of the product causes the curtain to wrap the product. Once the product is wrapped, the film is sealed and cut transversally to obtain a new curtain and a wrapped product.

US5187922A discloses a wrapping machine comprising a conveying unit configured to convey a product in a forward direction; a first reel support configured to support a first reel of film; a first winder with a first motorized roller disposed above the conveying unit and downstream of the first reel support in the forward direction; a second reel support assembly configured to support a second reel of film; a second winder with a second motorized roller disposed downstream of the second reel support in the forward direction; and a transversal sealing and cutting assembly downstream of the motorised rollers in the forward direction and configured to transversely seal together and transversely cut the film.

EP0304979B1 discloses a product wrapping machine according to the preamble of claim 1.

### DISCLOSURE OF THE INVENTION

The object of the invention is to provide a product wrapping machine and an operation method of a product wrapping machine, as defined in the claims.

A first aspect of the invention relates to a product wrapping machine. The wrapping machine comprises a first reel support configured to support a first reel of a first film; a second reel support configured to support a second reel of a second film; a transversal sealing and cutting assembly with a first sealing and cutting tool and a second sealing and cutting tool configured to cooperate for sealing and cutting the films together; an output conveying unit which is configured to convey a product in a forward direction and which is arranged downstream of the transversal sealing and cutting assembly in the forward direction; a first winder configured to drive the first film; and a second winder configured to drive the second film.

During the wrapping of a product, a film curtain with a transversal sealing with respect to the forward direction is generated between the first film and the second film, and the product is wrapped by it once it is positioned downstream of the transversal sealing and cutting assembly during its movement in the forward direction.

The transversal sealing and cutting assembly is arranged on the machine with the possibility of movement in the forward direction and in the opposite direction, and the machine comprises an actuation unit to cause this movement. In some circumstances, such as when the product to be wrapped is light in weight for example, the product does not have sufficient force to push the film curtain as it moves forward and may be held back by the film curtain, making it impossible to move forward. In the proposed machine this is solved by enabling the transversal sealing and cutting assembly to move in the forward direction of the product and in an opposite backward direction, since in a circumstance where in the state of the art the product is not wrapped or requires additional drives to push the product and cause it to move downstream of the transversal sealing and cutting assembly, with the proposed machine the transversal sealing and cutting assembly can be moved in the opposite direction to the forward direction so that the film curtain wraps the product.

The winders are associated to the transversal sealing and cutting assembly in such a way that they move together with the transversal sealing and cutting assembly in the forward direction and in the backward direction. In the case of moving only the transversal sealing and cutting assembly, an extra film is generated between the winder and the transversal sealing and cutting assembly during this movement. When the transversal sealing and cutting assembly returns to its original position, this excess film loses tension and the correct wrapping of a new product would be impossible or difficult. It is common in the state of the art to use a buffer for each film, generally in the form of a plurality of rollers whose distance can vary between them, through which each film is recirculated to maintain the tension of the films regardless of the position of the transversal sealing and cutting assembly. However, this buffer generates a tension in the film curtain that prevents the passage of light products, for example, even if the sealing and cutting assembly moves in the opposite direction to the forward direction of the product. This problem is solved in the proposed machine by moving the winders together with the sealing and cutting assembly, since unwanted accumulation of film between the corresponding winder and the transversal sealing and cutting assembly is prevented during the movement of the transversal sealing and cutting assembly in the forward direction and in the opposite direction.

The output conveying unit comprises a receiving area for receiving the product to be conveyed, and this receiving area is associated with the transversal sealing and cutting assembly in such a way that it also moves in conjunction with the transversal sealing and cutting assembly in the forward direction and in the opposite direction. This at least ensures continuity between the output conveying unit and the transversal sealing and cutting assembly during the movement of the transversal sealing and cutting assembly, irrespective of the position in which the product is arranged with respect to the transversal sealing and cutting assembly during their respective movements.

The machine further comprises a control unit configured to control at least the displacement of the transversal sealing and cutting assembly, the winders and the receiving area in the forward direction and in a backward direction opposite to the forward direction.

The control unit is configured to cause the transversal sealing and cutting assembly, the winders and the receiving area of the output conveying unit to start a joint movement in the backward direction when the product contacts the film curtain or before such contact, and to end said joint movement when the product is arranged downstream of the sealing and cutting tools of the transversal sealing and cutting assembly in the forward direction or when the transversal sealing and cutting assembly travels a predetermined distance.

Thus, with the proposed machine, any type of product can be wrapped in a simple and safe way.

A second aspect of the invention relates to a method of operating a product wrapping machine.

In the method, a product to be wrapped is fed in a forward direction towards an output conveying unit of the wrapping machine in such a way that the product is at least partially wrapped with a film curtain formed by the transverse sealing between a first film and a second film; the first film is driven by a first winder and the second film is driven by a second winder, while the product is being wrapped; and the two films are sealed together and cut upstream of the wrapped product by means of a transversal sealing and cutting assembly of the machine comprising a first sealing and cutting tool and a second sealing and cutting tool facing each other, in such a way that upstream of the cut a new film curtain is generated with the films sealed together and downstream of the cut a product wrapped between both films transversally sealed together upstream and downstream the product in the forward direction is obtained.

The method further comprises moving together, in the forward direction and in a backward direction opposite to the forward direction, the transversal sealing and cutting assembly, the winders and a receiving area of the output conveying unit receiving such product while moving in the forward direction, with the sealing and cutting tools separated and not cooperating with each other; closing said sealing and cutting tools so that they cooperate with each other upstream of the product in the forward direction; and moving the transversal sealing and cutting assembly, the winders and the receiving area of the output conveying unit together and in the forward direction, with the sealing and cutting tools closed at least at the beginning of such movement.

The transversal sealing and cutting assembly, the winders and the receiving area of the output conveying unit start their joint movement in the backward direction when the product contacts the film curtain or before such contact, and end their joint movement when the product is arranged downstream of the sealing and cutting tools of the transversal sealing and cutting assembly in the forward direction or when the transversal sealing and cutting assembly travels a predetermined distance.

Thus, in addition to the advantages already described for the first aspect of the invention, the method also results in higher productivity of the machine and better quality of the transversal sealing that performs by the transversal sealing and cutting assembly. This is because the method allows a longer sealing time to be used by moving the transversal sealing and cutting assembly in the forward direction, at least for part of the time that the sealing and cutting tools remain closed, while the transversal sealing and cutting assembly returns to the initial position. Similarly, moving the sealing and cutting tools in the backward direction during wrapping, with the sealing and cutting tools open, increases the wrapping speed of the machine and increases its productivity.

These and other advantages and features of the invention will become apparent in view of the figures and the detailed description of the invention.

### DESCRIPTION OF THE DRAWINGS

Figure 1 shows an embodiment of the product wrapping machine according to the invention.
Figure 2 is a section view of a part of the machine of figure 1, showing sealing and cutting tools of a transversal sealing and cutting assembly of the machine.
Figure 3 shows a perspective view of a part of the machine shown in figure 1.
Figure 4 shows a product before being wrapped by a film curtain.
Figure 5 shows the product of figure 4, it being wrapped by a film curtain.
Figure 6 shows the product of figure 4, wrapped by a film curtain and with the transversal sealing and cutting assembly starting to operate on the films forming the film curtain.
Figure 7 shows the product of figure 4, wrapped by a film curtain, with the transversal sealing and cutting assembly moving in the forward direction and operating on the films forming the film curtain.
Figure 8 shows the product of figure 4 wrapped and with the transversal sealing and cutting assembly moving in the forward direction and not operating on the films forming the film curtain.

### DETAILED DISCLOSURE OF THE INVENTION

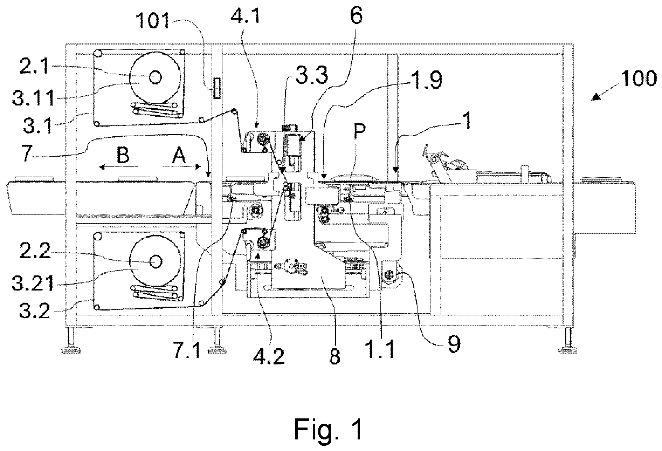

A first aspect of the invention relates to a product wrapping machine 100, as shown by way of example in figure 1. The machine 100 comprises a first reel support 2.1 configured to support a first reel 3.11 of a first film 3.1 which is used for wrapping products P; a second reel support 2.2 configured to support a second reel 3.21 of a second film 3.2 which is used for wrapping products P; a first winder 4.1 configured to drive the first film 3.1; and a second winder 4.2 configured to drive the second film 3.2. By driving the films 3.1 and 3.2, said films 3.1 and 3.2 are unwound from the corresponding film reel 3.11 or 3.21.

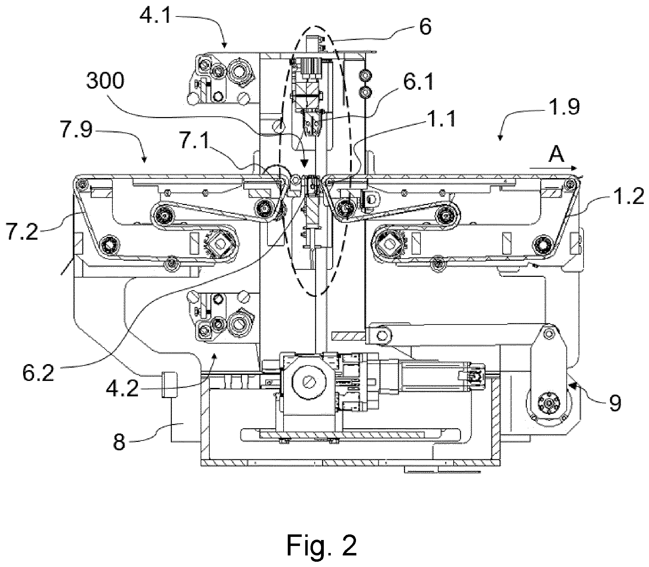

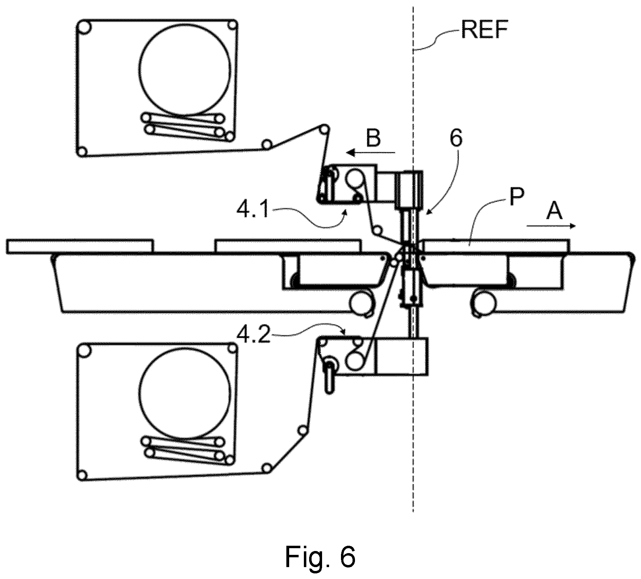

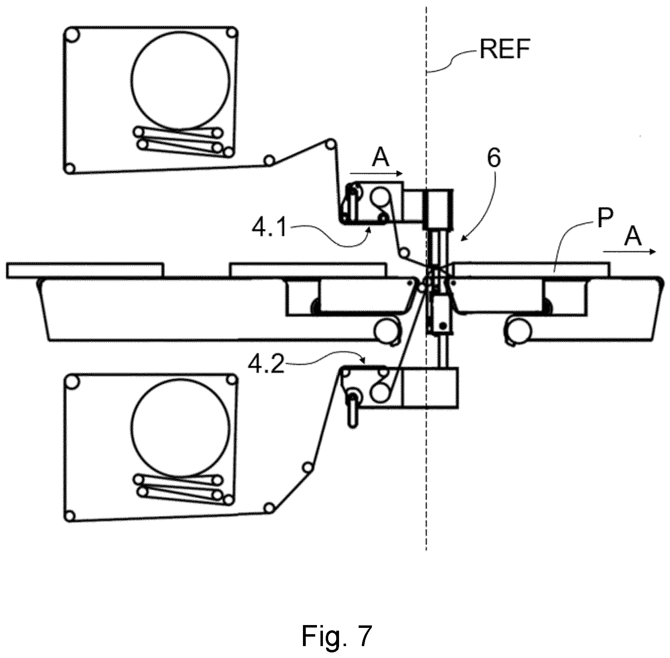

The machine 100 further comprises a transversal sealing and cutting assembly 6, see figure 2, with a first sealing and cutting tool 6.1 and a second sealing and cutting tool 6.2 configured to cooperate with each other for sealing together and cutting the films 3.1 and 3.2. The sealing and cutting tools 6.1 and 6.2 can be arranged in a first position in which they are separated from each other (they are open, figure 2) and allow a product P to move between them in the forward direction A, and a second position in which they are closed with no space between them and in which they cooperate to perform the sealing and cutting operations (figures 6 and 7).

The machine 100 also comprises an output conveying unit 1 which is configured to convey a product P in a forward direction A, which is arranged downstream of the transversal sealing and cutting assembly 6 in the forward direction A and which comprises a receiving area 1.9 for receiving the product P to be conveyed.

The transversal sealing and cutting assembly 6 is arranged in the machine 100 with the possibility of displacement in the forward direction A and in a backward direction B opposite to the forward direction A, and the machine 100 comprises an actuation unit 9 for causing the transversal sealing and cutting assembly 6 to move in said directions A and B.

The winders 4.1 and 4.2 and the receiving area 1.9 of the output conveying unit 1 are associated with the transversal sealing and cutting assembly 6 in such a way that they move together with the transversal sealing and cutting assembly 6 in the forward direction A and in the backward direction B. In this way, the transversal sealing and cutting assembly 6, the winders 4.1 and 4.2 and the receiving area 1.9 of the output conveying unit 1 move together in the A and B directions.

The output conveying unit 1 preferably comprises at least a plurality of support members 1.1, which may be rollers for example, and a conveyor belt 1.2 supported by said support members 1.1. The receiving area 1.9 comprises at least the support member 1.1 closest to the transversal sealing and cutting assembly 6 in the forward direction A. As said support member 1.1 moves in the forward direction A, part of the conveyor belt 1.2 in the plane on which the products P are arranged also retracts in said forward direction A and the output conveying unit 1.1 preferably comprises an additional support member 1.1 in the receiving area 1.9 so that said conveyor belt 1.2 can absorb this retracted distance and the products P are thus not affected.

The machine 100 comprises an input conveying unit 7 configured to convey a product P in the forward direction A and arranged upstream of the transversal sealing and cutting assembly 6 in the forward direction A. The input conveying unit 7 comprises a supplying area 7.9 which is associated with the transversal sealing and cutting assembly 6 in such a way that it moves together with the transversal sealing and cutting assembly 6 in the forward direction A and in the backward direction B. The supplying area 7.9 is the area of the input conveying unit 7 from which a product P leaves the input conveying unit 7. The transversal sealing and cutting assembly 6 is arranged in a free space 300 of the machine 100 present between the output conveying unit 1 and the input conveying unit 7.

The input conveying unit 7 preferably comprises at least a plurality of support members 7.1, which may be rollers for example, and a conveyor belt 7.2 supported by said support members 7.1. The supplying area 7.9 comprises at least the support member 7.1 closest to the transversal sealing and cutting assembly 6 in the forward direction A. As said support member 7.1 moves in the backward direction B, part of the conveyor belt 7.2 in the plane on which the products P are arranged also retracts in said backward direction B and the input conveying unit 7 preferably comprises an additional support member 7.1 in the receiving area 7.9 so that said conveyor belt 7.2 can absorb this retracted distance and the products P are thus not affected.

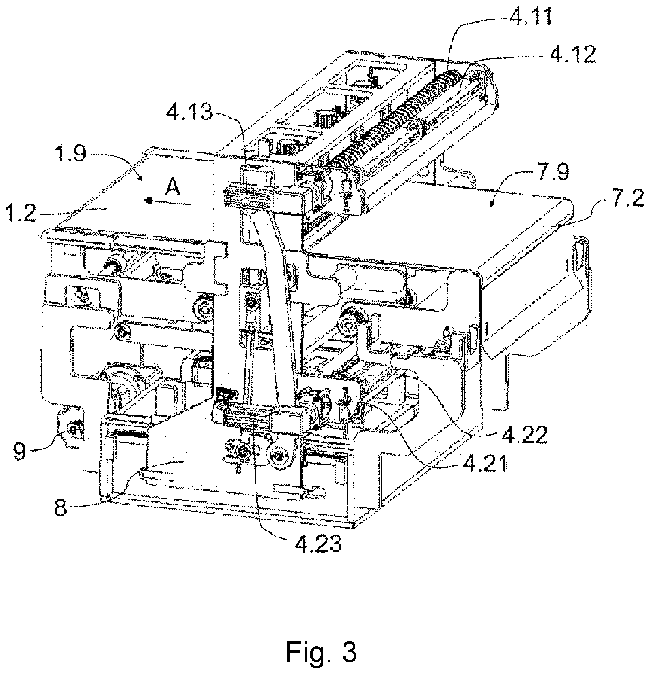

Each winder 4.1 and 4.2, as shown in figure 3, preferably comprises a respective drive roller 4.11 and 4.21 and a respective support roller 4.12 and 4.22 between which the corresponding film 3.1 and 3.2 is moved, and a respective actuator 4.13 and 4.23 associated with the corresponding drive roller 4.11 and 4.21 to cause rotation of said drive rollers 4.11 and 4.21 when actuated. The rotation of the drive roller 4.11 causes traction of the first film 3.1, and the rotation of the drive roller 4.21 causes traction of the second film 3.2. Preferably the actuation (rotation) on both drive rollers 4.11 and 4.21 is synchronised.

The machine 100 may comprise a movable structure 8 to which at least the transversal sealing and cutting assembly 6 can be attached (with possibility of displacement of at least one of the sealing and cutting tools 6.1 and 6.2 to be opened and closed), and the actuation unit 9 is configured to act on the movable structure 8 to cause displacement of the sealing and cutting assembly 6 in the directions A and B. Preferably, the winders 4.1 and 4.2 are also attached to the movable structure 8, thus facilitating a joint displacement, as well as the areas 1.9 and 7.9 of the conveying units 1 and 7.

The first sealing and cutting tool 6.1 and the second sealing and cutting tool 6.2 of the transversal sealing and cutting assembly 6 are preferably attached to the movable structure 8, at least one of said two sealing and cutting tools 6.1 and 6.2 being attached to said movable structure 8 with ability of displacement to perform the sealing and cutting operation of the films 3.1 and 3.2, and the winders 4.1 and 4.2 being preferably attached to the movable structure 8 in such a way that they move in such a way that they move in solidarity with said movable structure 8 and with the tools 6.1 and 6.2 in the forward direction A and in the backward direction B.

The machine 100 further comprises a control unit 101 configured to control at least the displacement of the transversal sealing and cutting assembly 6, the winders 4.1 and 4.2 and the receiving area 1.9 in the forward direction A and in the backward direction B. At least in embodiments in which the transversal sealing and cutting assembly 6, the winders 4.1 and 4.2 and the receiving area 1.9 are attached to the movable structure 8, the control unit 101 is communicated with the actuation unit 9 to control the actuation of the actuation unit 9.

The control unit 101 may also be configured to control the actuations on the drive rollers 4.11 and 4.21 of the winders 4.1 and 4.2, being preferably configured to cause simultaneous actuation of the actuators 4.13 and 4.23 simultaneously and during movement of the sealing and cutting tool 6 in the backward direction B.

The control unit 101 may comprise an FPGA, a controller, a processor or any other computationally capable device.

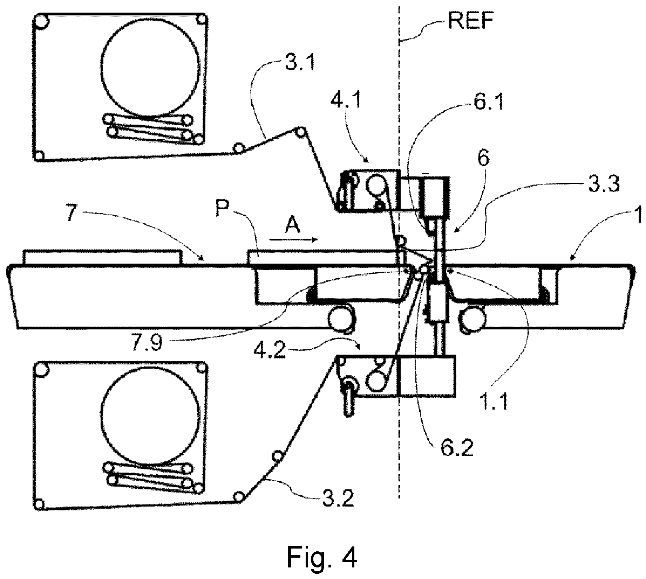

When the transversal sealing and cutting assembly 6 seals the films 3.1 and 3.2 together, a film curtain 3.3 (see figure 4) is generated in the path of the product P during its advance in the forward direction A, said film curtain 3.3 being used to wrap the product P. In this figure 4, and in the following ones, a reference REF has been represented in broken lines in order to be able to discern the displacements of the different parts of the machine 100 and of the product P, this reference REF being maintained in the same position in all cases (static).

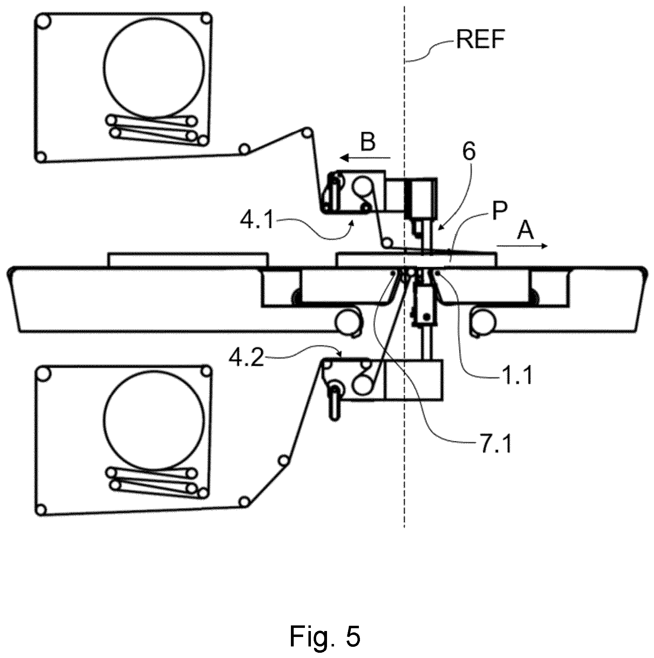

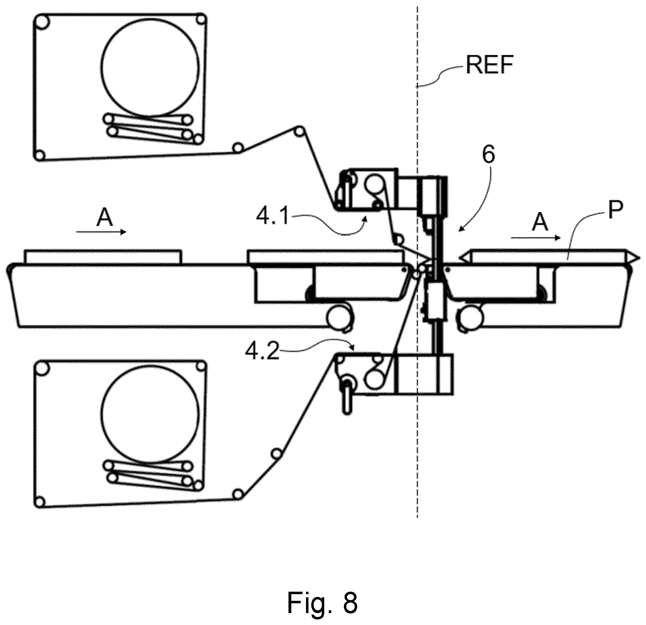

When the product P contacts the film curtain 3.3 or before such contact, the transversal sealing and cutting assembly 6 is displaced in the backward direction B such that this displacement, together with the displacement of the product P in the forward direction A, causes the product P to be wrapped by the film curtain 3.3 (see figure 5). The transversal sealing and cutting assembly 6 is displaced by a predetermined distance or until being upstream of the product P in the forward direction A. With the transversal sealing and cutting assembly 6 upstream of the product P in the forward direction A, the tools 6.1 and 6.2 (see figures 6 and 7) are closed to cut the films 3.1 and 3.2 (the parts of the film curtain 3.3 which belong to the films 3.1 and 3.2) and seal the films 3.1 and 3.2 together at both sides of the cut (with one wide seal or with two seals), so that a new film curtain 3.3 is obtained upstream of the cut in the forward direction A and a product P wrapped between both films 3.1 and 3.2 sealed together downstream of the cut in the forward direction A (see figure 8). The order in which the sealing(s) and cutting are done is not relevant, and the cutting can be done before the sealing(s) or the other way round. The films 3.1 and 3.2 wrapping a product P are arranged transversely sealed together upstream of said product P and downstream of said product P, the longitudinal sides of said films 3.1 and 3.2 which are arranged between both transversal seals (in the area of product P) preferably being unsealed. The longitudinal seals, if necessary, are made at a later stage.

A second aspect of the invention relates to a operation method for a product wrapping machine 100. In the method, a product P to be wrapped is supplied in a forward direction A to a output conveying unit 1 of the machine 100, which receives said product P in a receiving area 1.9, such that during its movement, the product P is at least partially wrapped with a film curtain 3.3 formed by a sealing performed between a first film 3.1 and a second film 3.2; the first film 3.1 is driven by a first winder 4.1 and the second film 3.2 is driven by a second winder 4.2, while the product P is being wrapped; and the two films 3.1 and 3.2 are sealed together and cut upstream of the wrapped product P, by means of a sealing and cutting tool 6 of the machine 100 comprising a first sealing and cutting tool 6.1 and a second sealing and cutting tool 6.2 facing each other, such that upstream of the cut a new curtain of film 3.3 is generated with the films 3.1 and 3.2 sealed together, and downstream of the cut a product P wrapped between both films 3.1 and 3.2 sealed together upstream and downstream of said product P in the forward direction A is obtained. Preferably, the longitudinal sides of said films 3.1 and 3.2 which are arranged between the two transverse seals remain unsealed.

The method further comprises moving together, in a backward direction B which is opposite to the forward direction A, at least the transversal sealing and cutting assembly 6, the winders 4.1 and 4.2 and a receiving area 1.9 of the output conveying unit 1 receiving said product P during the movement of said product P in the forward direction A, with the sealing and cutting tools 6.1 and 6.2 separated and not cooperating with each other (open); closing said sealing and cutting tools 6.1 and 6.2 to cooperate with each other with the transversal sealing and cutting assembly 6 being upstream of the product P in the forward direction A; and moving together and in the forward direction A at least the transversal sealing and cutting assembly 6, the winders 4.1 and 4.2 and the receiving area 1.9 of the output conveying unit 1, with the sealing and cutting tools 6.1 and 6.2 being closed at least at the beginning of such movement. The sealing and cutting tools 6.1 and 6.2 remain closed at least as long as necessary to perform the sealing and cutting operations.

The joint movement in the backward direction B starts when the product P contacts the film curtain 3.3 or before such contact occurs and ends when the product P is arranged downstream of the sealing and cutting assembly 6 in the forward direction A or when the sealing and cutting assembly 6 travels a predetermined distance. If the movement is stopped and the transversal sealing and cutting assembly 6 is not yet upstream of the product P in the forward direction A, the transversal sealing and cutting assembly 6 preferably remains stationary at least until the product P is downstream said transversal sealing and cutting assembly 6 in the forward direction A, at which point the sealing and cutting tools 6.1 and 6.2 of the transversal sealing and cutting assembly 6 can be closed because they no longer clamp the product P.

Preferably the winders 4.1 and 4.2 drive the films 3.1 and 3.2 only during its movement in the backward direction B if the product P is downstream of the transversal sealing and cutting assembly 6 in the forward direction A at the end of this movement, or, if the product P is not downstream of the transversal sealing and cutting assembly 6 in the forward direction A at the end of this movement, during the displacement of said winders 4.1 and 4.2 in the backward direction B and upon completion of said displacement for the time it takes for the product P to be arranged downstream of the transversal sealing and cutting assembly 6 in the forward direction A. In general, the winders 4.1 and 4.2 drive the films 3.1 and 3.2 from the beginning of its travel in the backward direction B until the product P is arranged downstream of the transversal sealing and cutting assembly 6 in the forward direction A and said winders 4.1 and 4.2 are stationary, which is when the film curtain 3.3 wraps the product P.

Preferably, the winders 4.1 and 4.2 drive the films 3.1 and 3.2 at a speed equal to or greater than the sum of the speed of movement of the winders 4.1 and 4.2 in the backward direction B and the speed of the product P in the forward direction A, the productivity of the machine 100 being thus improved.

The method may further comprise moving a supplying area 7.9 of an input conveying unit 7 from which the product P is supplied to the output conveying unit 1 in the forward direction A, together with the transversal sealing and cutting assembly 6, the winders 4.1 and 4.2 and the receiving area 1.9, in the forward direction A and in the backward direction B.

The method can be implemented in a machine 100 according to the first aspect of the invention. Thus, the method would comprise the embodiment or configuration corresponding to the corresponding embodiment or configuration of the machine 100, and vice versa. Likewise, what is described for the machine 100 in any of its embodiments and or configurations is valid for the corresponding embodiment or configuration of the method, and vice versa.

## Claims

1. Product wrapping machine comprising a first reel support (2.1) configured to support a first reel (3.11) of a first film (3.1); a first winder (4.1) configured to drive the first film (3.1); a second reel support (2.2) configured to support a second reel (3.21) of a second film (3.2); a second winder (4.2) configured to drive the second film (3.2);
a transversal sealing and cutting assembly (6) with a first sealing and cutting tool (6.1) and a second sealing and cutting tool (6.2) configured to cooperate with each other; and an output conveying unit (1) which is configured to convey a product (P) in a forward direction (A), which comprises a receiving area (1.9) for receiving the product (P) to be conveyed, and which is arranged downstream of the transversal sealing and cutting assembly (6) in the forward direction (A), the transversal sealing and cutting assembly (6) is arranged in the machine (100) with the possibility of movement in the forward direction (A) and
in a backward direction (B) opposite the forward direction (A), the machine (100) comprising an actuation unit (9) for causing the transversal sealing and cutting assembly (6) to move in the forward direction (A) and in the backward direction (B),
**characterised in that**
the winders (4.1, 4.2) and the receiving area (1.9) of the output conveying unit (1) being associated with the transversal sealing and cutting assembly (6) in such a way that they move together with the transversal sealing and cutting assembly (6) in the forward direction (A) and in the backward direction (B), the machine (100) comprising a control unit (101) configured to control at least the displacement of the transversal sealing and cutting assembly (6), the winders (4.1, 4.2) and the receiving area (1.9) in the forward direction (A) and in a backward direction (B) opposite to the forward direction (A), the control unit (101) being configured to cause the transversal sealing and cutting assembly (6), the winders (4.1, 4.2) and the receiving area (1.9) of the output conveying unit (1) to start a joint movement in the backward direction (B) when the product (P) contacts a film curtain (3.3) formed by a transverse sealing between a first film (3.1) and a second film (3.2) or before
such contact, and to end the joint movement when the product (P) is arranged downstream of the sealing and cutting tools (6.1, 6.2) of the transversal sealing and cutting assembly (6) in the forward direction (A) or when the transversal sealing and cutting assembly (6) travels a predetermined distance.

2. Product wrapping machine according to claim 1, wherein the output conveying unit (1) comprises at least a plurality of support members (1.1) and a conveyor belt (1.2) supported by said support members (1.1), the receiving area (1.9) of the output conveying unit (1) comprising at least the support member (1.1) closest to the transversal sealing and cutting assembly (6).

3. Product wrapping machine according to claim 1 or 2, comprising an input conveying unit (7) configured to convey a product (P) in the forward direction (A) and arranged upstream of the transversal sealing and cutting assembly (6) in the forward direction (A), the input conveying unit (7) comprising a supplying area (7.9) and the supplying area (7.9) being associated with the transversal sealing and cutting assembly (6) in such a way that it moves together with the transversal sealing and cutting assembly (6) in the forward direction (A) and in the backward direction (B).

4. Product wrapping machine according to claim 3, wherein the input conveying unit (7) comprises at least a plurality of support members (7.1) and a conveyor belt (7.2) supported by said support members (7.1), the supplying area (7.9) comprising at least the support member (7.1) closest to the transversal sealing and cutting assembly (6).

5. Product wrapping machine according to claim 3 or 4, wherein the transversal sealing and cutting assembly (6) is arranged in a free space (300) of the machine (100) between the output conveying unit (1) and the input conveying unit (7).

6. Product wrapping machine according to any of claims 1 to 5, wherein each winder (4.1, 4.2) comprises a drive roller (4.11, 4.21) and a support roller (4.12, 4.22) between which the respective film (3.1, 3.2) is displaced, and a respective actuator (4.13, 4.23) associated with the corresponding drive roller (4.11, 4.21) to cause the drive rollers (4.11, 4.21) to rotate when actuated and thus drive the films (3.1, 3.2).

7. Product wrapping machine according to claim 6, wherein the control unit (101) is configured to cause simultaneous actuation of the actuators (4.13, 4.23) during movement of the transversal sealing and cutting tool (6) in the backward direction (B).

8. Product wrapping machine according to any of claims 1 to 7, comprising a movable structure (8), the transversal sealing and cutting assembly (6) being attached to the movable structure (8) and the actuation unit (9) being configured to act on the movable structure (8) to cause the transversal sealing and cutting assembly (6) to move, the winders (4.1, 4.2) being preferably attached to the movable structure (8).

9. Product wrapping machine according to claim 8, wherein the area (1.9, 7.9) of a conveying unit (1, 7) which moves with the transversal sealing and cutting assembly (6) is attached to the movable structure (8).

10. Product wrapping machine according to claim 8 or 9, wherein the sealing and cutting tools (6.1, 6.2) of the transversal sealing and cutting assembly (6) are attached to the movable structure (8), at least one of said two sealing and cutting tools (6.1, 6.2) being attached to said movable structure (8) with ability of vertical displacement, and the winders (4.1, 4.2) being attached to the movable structure (8) in such a way that said winders (4.1, 4.2) move together with the movable structure (8).

11. Operation method of a product wrapping machine, wherein a product (P) to be wrapped is fed in a forward direction (A) towards an output conveying unit (1) of the machine (100), in such a way that during its movement the product (P) is at least partially wrapped with a film curtain (3.3) formed by a transverse sealing between a first film (3.1) and a second film (3.2); the first film (3.1) is driven by a first winder (4.1) and the second film (3.2) is driven by a second winder (4.2), while the product (P) is being wrapped; and the two films (3.1, 3.2) are transversely sealed together and transversely cut upstream of the wrapped product (P) by means of a transversal sealing and cutting tool (6) of the machine (100) comprising a first sealing and cutting tool (6.1) and a second sealing and cutting tool (6.2) facing each other, so that upstream of the cut a new film curtain (3.3) is generated with the films (3.1, 3.2) sealed together and downstream of the cut a product (P) wrapped between both films (3.1, 3.2) transversely sealed together upstream and downstream of said product (P) in the forward direction (A) is obtained, **characterised in that** the method further comprises moving together, in a backward direction (B) which is opposite to the forward direction (A), the transversal sealing and cutting assembly (6), the winders (4.1, 4.2) and a receiving area (1.9) of the output conveying unit (1) which receives the said product (P) during the movement of said product (P) in the forward direction (A), with the sealing and cutting tools (6.1, 6.2) of the transversal sealing and cutting assembly (6) being separated and not cooperating with each other; closing said sealing and cutting tools (6.1, 6.2) so that they cooperate with each other, with the transversal sealing and cutting assembly (6) being upstream of the product (P) in the forward direction (A); and moving together and in the forward direction (A) the transversal sealing and cutting assembly (6), the winders (4.1, 4.2) and the receiving area (1.9) of the output conveying unit (1), with the sealing and cutting tools (6.1, 6.2) of the transversal sealing and cutting assembly (6) being closed at least at the beginning of such displacement, wherein the transversal sealing and cutting assembly (6), the winders (4.1, 4.2) and the receiving area (1.9) of the output conveying unit (1) start their joint movement in the backward direction (B) when the product (P) contacts the film curtain (3.3) or before such contact, and end their joint movement when the product (P) is arranged downstream of the sealing and cutting tools (6.1, 6.2) of the transversal sealing and cutting assembly (6) in the forward direction (A) or when the transversal sealing and cutting assembly (6) travels a predetermined distance.

12. Operation method according to claim 11, wherein the winders (4.1, 4.2) are caused to drive the corresponding film (3.1, 3.2) from the beginning of the displacement of the winders (4.1, 4.2) in the forward direction (B) until the product (P) is disposed downstream of the transversal sealing and cutting assembly (6) in the forward direction (A) and said winders (4.1, 4.2) are stopped.

13. Operation method according to claim 11 or 12, wherein the winders (4.1, 4.2) are caused to drive the corresponding film (3.1, 3.2) at a speed equal to or greater than the sum of the travel speed of the winders (4.1, 4.2) in the backward direction (B) and the speed of the product (P) in the forward direction (A).

14. Operation method according to any of claims 11 to 13, wherein a displacement together with the transversal sealing and cutting assembly (6), the winders (4.1, 4.2) and the receiving area (1.9) of the output conveying unit (1), in the forward direction (A) and in the backward direction (B), of a supplying area (7.9) of an input conveying unit (7) from which the product (P) is supplied to the output conveying unit (1) is caused.

## Patentansprüche

1. Produkteinwickelmaschine, umfassend einen ersten Spulenträger (2.1), der dazu konfiguriert ist, eine erste Spule (3.11) eines ersten Films (3.1) zu tragen; einen ersten Wickler (4.1), der dazu konfiguriert ist, den ersten Film (3.1) anzutreiben; einen zweiten Spulenträger (2.2), der dazu konfiguriert ist, eine zweite Spule (3.21) eines zweiten Films (3.2) zu tragen; einen zweiten Wickler (4.2), der dazu konfiguriert ist, den zweiten Film (3.2) anzutreiben; eine Querversiegelungs- und Schneidebaugruppe (6) mit einem ersten Versiegelungs- und Schneidwerkzeug (6.1) und einem zweiten Versiegelungs- und Schneidwerkzeug (6.2), die dazu konfiguriert sind, miteinander zusammenzuwirken; und eine Ausgabefördereinheit (1), die dazu konfiguriert ist, ein Produkt (P) in einer Vorwärtsrichtung (A) zu fördern, die einen Aufnahmebereich (1.9) zum Aufnehmen des zu fördernden Produkts (P) umfasst und die in der Vorwärtsrichtung (A) stromabwärts der Querversiegelungs- und Schneidebaugruppe (6) angeordnet ist, wobei die Querversiegelungs- und Schneidebaugruppe (6) in der Maschine (100) mit der Möglichkeit der Bewegung in der Vorwärtsrichtung (A) und in einer der Vorwärtsrichtung (A) entgegengesetzten Rückwärtsrichtung (B) angeordnet ist, wobei die Maschine (100) eine Betätigungseinheit (9) umfasst, um zu bewirken, dass sich die Querversiegelungs- und Schneidebaugruppe (6) in der Vorwärtsrichtung (A) und in der Rückwärtsrichtung (B) bewegt, **dadurch gekennzeichnet, dass** die Wickler (4.1, 4.2) und der Aufnahmebereich (1.9) der Ausgabefördereinheit (1) der Querversiegelungs- und Schneidebaugruppe (6) derart zugeordnet sind, dass sie sich gemeinsam mit der Querversiegelungs- und Schneidebaugruppe (6) in der Vorwärtsrichtung (A) und in der Rückwärtsrichtung (B) bewegen, wobei die Maschine (100) eine Steuereinheit (101) umfasst, die dazu konfiguriert ist, mindestens die Verschiebung der Querversiegelungs- und Schneidebaugruppe (6), der Wickler (4.1, 4.2) und des Aufnahmebereichs (1.9) in der Vorwärtsrichtung (A) und in einer der Vorwärtsrichtung (A) entgegengesetzten Rückwärtsrichtung (B) zu steuern, wobei die Steuereinheit (101) dazu konfiguriert ist, zu bewirken, dass die Querversiegelungs- und Schneidebaugruppe (6), die Wickler (4.1, 4.2) und der Aufnahmebereich (1.9) der Ausgabefördereinheit (1) eine gemeinsame Bewegung in Rückwärtsrichtung (B) einleiten, wenn das Produkt (P) mit einem Filmvorhang (3.3) in Kontakt kommt, der durch eine Querversiegelung zwischen einem ersten Film (3.1) und einem zweiten Film (3.2) gebildet ist oder vor einem solchen Kontakt, und die gemeinsame Bewegung zu beenden, wenn sich das Produkt (P) in Vorwärtsrichtung (A) stromabwärts der Versiegelungs- und Schneidwerkzeuge (6.1, 6.2) der Querversiegelungs- und Schneidebaugruppe (6) befindet oder wenn die Querversiegelungs- und Schneidebaugruppe (6) eine vorbestimmte Entfernung zurückgelegt hat.

2. Produkteinwickelmaschine nach Anspruch 1, wobei die Ausgabefördereinheit (1) mindestens eine Vielzahl von Tragelementen (1.1) und ein von den Tragelementen (1.1) getragenes Förderband (1.2) umfasst, wobei der Aufnahmebereich (1.9) der Ausgabefördereinheit (1) mindestens das der Querversiegelungs- und Schneidebaugruppe (6) am nächsten gelegene Tragelement (1.1) umfasst.

3. Produkteinwickelmaschine nach Anspruch 1 oder 2, umfassend eine Eingabefördereinheit (7), die dazu konfiguriert ist, ein Produkt (P) in der Vorwärtsrichtung (A) zu fördern, und die in der Vorwärtsrichtung (A) stromaufwärts der Querversiegelungs- und Schneidebaugruppe (6) angeordnet ist, wobei die Eingabefördereinheit (7) einen Zuführbereich (7.9) umfasst und der Zuführbereich (7.9) der Querversiegelungs- und Schneidebaugruppe (6) derart zugeordnet ist, dass er sich gemeinsam mit der Querversiegelungs- und Schneidebaugruppe (6) in Vorwärtsrichtung (A) und in Rückwärtsrichtung (B) bewegt.

4. Produkteinwickelmaschine nach Anspruch 3, wobei die Eingabefördereinheit (7) mindestens eine Vielzahl von Tragelementen (7.1) und ein von den Tragelementen (7.1) getragenes Förderband (7.2) umfasst, wobei der Zuführbereich (7.9) mindestens das der Querversiegelungs- und Schneidebaugruppe (6) am nächsten gelegene Tragelement (7.1) umfasst.

5. Produkteinwickelmaschine nach Anspruch 3 oder 4, wobei die Querversiegelungsund Schneidebaugruppe (6) in einem Freiraum (300) der Maschine (100) zwischen der Ausgabefördereinheit (1) und der Eingabefördereinheit (7) angeordnet ist.

6. Produkteinwickelmaschine nach einem der Ansprüche 1 bis 5, wobei jeder Wickler (4.1, 4.2) eine Antriebsrolle (4.11, 4.21) und eine Trägerrolle (4.12, 4.22) umfasst, zwischen denen der jeweilige Film (3.1, 3.2) verschoben wird, sowie einen jeweiligen Aktuator (4.13, 4.23), der der entsprechenden Antriebsrolle (4.11, 4.21) zugeordnet ist, um zu bewirken, dass sich die Antriebsrollen (4.11, 4.21) bei Betätigung drehen und somit die Filme (3.1, 3.2) antreiben.

7. Produkteinwickelmaschine nach Anspruch 6, wobei die Steuereinheit (101) dazu konfiguriert ist, eine gleichzeitige Betätigung der Aktuatoren (4.13, 4.23) während der Bewegung des Versiegelungs- und Schneidwerkzeugs (6) in Rückwärtsrichtung (B) zu bewirken.

8. Produkteinwickelmaschine nach einem der Ansprüche 1 bis 7, umfassend eine bewegliche Struktur (8), wobei die Querversiegelungs- und Schneidebaugruppe (6) an der beweglichen Struktur (8) angebracht ist und die Betätigungsbaugruppe (9) dazu konfiguriert ist, auf die bewegliche Struktur (8) einzuwirken, um zu bewirken, dass sich die Querversiegelungs- und Schneidebaugruppe (6) bewegt, wobei die Wickler (4.1, 4.2) vorzugsweise an der beweglichen Struktur (8) angebracht sind.

9. Produkteinwickelmaschine nach Anspruch 8, wobei der Bereich (1.9, 7.9) einer Fördereinheit (1, 7), die sich mit der Querversiegelungs- und Schneidebaugruppe (6) bewegt, an der beweglichen Struktur (8) angebracht ist.

10. Produkteinwickelmaschine nach Anspruch 8 oder 9, wobei die Versiegelungs- und Schneidwerkzeuge (6.1, 6.2) der Querversiegelungs- und Schneidebaugruppe (6) an der beweglichen Struktur (8) angebracht sind, wobei mindestens eines der beiden Versiegelungs- und Schneidwerkzeuge (6.1, 6.2) mit der Fähigkeit zur vertikalen Verschiebung an der beweglichen Struktur (8) angebracht ist und die Wickler (4.1, 4.2) derart an der beweglichen Struktur (8) angebracht sind, dass sich die Wickler (4.1, 4.2) gemeinsam mit der beweglichen Struktur (8) bewegen.

11. Betriebsverfahren einer Produkteinwickelmaschine, wobei ein einzuwickelndes Produkt (P) in Vorwärtsrichtung (A) zu einer Ausgabefördereinheit (1) der Maschine (100) derart zugeführt wird, dass das Produkt (P) während seiner Bewegung mindestens teilweise mit einem Filmvorhang (3.3) eingewickelt wird, der durch eine Querversiegelung zwischen einem ersten Film (3.1) und einem zweiten Film (3.2) gebildet wird; wobei der erste Film (3.1) von einem ersten Wickler (4.1) angetrieben wird und der zweite Film (3.2) von einem zweiten Wickler (4.2) angetrieben wird, während das Produkt (P) eingewickelt wird; und wobei die beiden Filme (3.1, 3.2) quer miteinander versiegelt und stromaufwärts des eingewickelten Produkts (P) quer geschnitten werden, und dies mittels eines Querversiegelungs- und Schneidwerkzeugs (6) der Maschine (100), das ein erstes Versiegelungs- und Schneidwerkzeug (6.1) und ein zweites Versiegelungs- und Schneidwerkzeug (6.2) umfasst, die einander zugewandt sind, sodass stromaufwärts des Schnitts ein neuer Filmvorhang (3.3) generiert wird, bei dem die Folien (3.1, 3.2) miteinander versiegelt sind, und stromabwärts des Schnitts ein Produkt (P) erhalten wird, das zwischen beiden Filmen (3.1, 3.2) eingewickelt ist, die in Vorwärtsrichtung (A) stromaufwärts und stromabwärts des Produkts (P) quer miteinander versiegelt sind**, dadurch gekennzeichnet, dass** das Verfahren ferner das gemeinsame Bewegen in einer der Vorwärtsrichtung (A) entgegengesetzten Rückwärtsrichtung (B) der Querversiegelungs- und Schneidebaugruppe (6), der Wickler (4.1, 4.2) und eines Aufnahmebereichs (1.9) der Ausgabefördereinheit (1), der das Produkt (P) während der Bewegung des Produkts (P) in Vorwärtsrichtung (A) aufnimmt, wobei die Versiegelungs- und Schneidwerkzeuge (6.1, 6.2) der Querversiegelungs- und Schneidebaugruppe (6) voneinander getrennt sind und nicht miteinander zusammenwirken; Schließen der Versiegelungs- und Schneidwerkzeuge (6.1, 6.2), sodass sie miteinander zusammenwirken, wobei sich die Querversiegelungs- und Schneidebaugruppe (6) in Vorwärtsrichtung (A) stromaufwärts des Produkts (P) befindet; und das gemeinsame Bewegen in Vorwärtsrichtung (A) der Querversiegelungs- und Schneidebaugruppe (6), der Wickler (4.1, 4.2) und des Aufnahmebereichs (1.9) der Ausgabefördereinheit (1) umfasst, wobei die Versiegelungs- und Schneidwerkzeuge (6.1, 6.2) der Querversiegelungs- und Schneidebaugruppe (6) mindestens zu Beginn einer solchen Verschiebung geschlossen sind, wobei die Querversiegelungs- und Schneidebaugruppe (6), die Wickler (4.1, 4.2) und der Aufnahmebereich (1.9) der Ausgabefördereinheit (1) ihre gemeinsame Bewegung in Rückwärtsrichtung (B) beginnen, wenn das Produkt (P) mit dem Filmvorhang (3.3) in Kontakt kommt oder vor einem solchen Kontakt, und ihre gemeinsame Bewegung beenden, wenn sich das Produkt (P) in Vorwärtsrichtung (A) stromabwärts der Versiegelungs- und Schneidwerkzeuge (6.1, 6.2) der Querversiegelungs- und Schneidebaugruppe (6) befindet oder wenn die Querversiegelungs- und Schneidebaugruppe (6) eine vorbestimmte Entfernung zurückgelegt hat.

12. Betriebsverfahren nach Anspruch 11, wobei bewirkt wird, dass die Wickler (4.1, 4.2) den entsprechenden Film (3.1, 3.2) ab dem Beginn der Verschiebung der Wickler (4.1, 4.2) in Vorwärtsrichtung (B) antreiben, bis das Produkt (P) in Vorwärtsrichtung (A) stromabwärts der Querversiegelungs- und Schneidebaugruppe (6) angeordnet ist und die Wickler (4.1, 4.2) gestoppt werden.

13. Betriebsverfahren nach Anspruch 11 oder 12, wobei bewirkt wird, dass die Wickler (4.1, 4.2) den entsprechenden Film (3.1, 3.2) mit einer Geschwindigkeit antreiben, die gleich oder größer ist als die Summe aus der Laufgeschwindigkeit der Wickler (4.1, 4.2) in Rückwärtsrichtung (B) und der Geschwindigkeit des Produkts (P) in Vorwärtsrichtung (A).

14. Betriebsverfahren nach einem der Ansprüche 11 bis 13, wobei eine Verschiebung zusammen mit der Querversiegelungs- und Schneidebaugruppe (6), den Wicklern (4.1, 4.2) und dem Aufnahmebereich (1.9) der Ausgabefördereinheit (1) in Vorwärtsrichtung (A) und in Rückwärtsrichtung (B) eines Zuführbereichs (7.9) einer Eingabefördereinheit (7) bewirkt wird, von dem aus das Produkt (P) zur Ausgabefördereinheit (1) zugeführt wird.

## Revendications

1. Machine d'emballage de produits comprenant un premier support de bobine (2.1) configuré pour supporter une première bobine (3.11) d'un premier film (3.1) ; un premier enrouleur (4.1) configuré pour entraîner le premier film (3.1) ; un deuxième support de bobine (2.2) configuré pour supporter une deuxième bobine (3.21) d'un deuxième film (3.2) ; un deuxième enrouleur (4.2) configuré pour entraîner le deuxième film (3.2) ; un ensemble de soudage et de découpe transversaux (6) comportant un premier outil de soudage et de découpe (6.1) et un deuxième outil de soudage et de découpe (6.2) configurés pour coopérer l'un avec l'autre ; et une unité de convoyage de sortie (1) qui est configurée pour convoyer un produit (P) dans une direction d'avance (A), qui comprend une zone de réception (1.9) destinée à recevoir le produit (P) à convoyer, et qui est agencée en aval de l'ensemble de soudage et de découpe transversaux (6) dans la direction d'avance (A), l'ensemble de soudage et de découpe transversaux (6) étant agencé dans la machine (100) de manière à pouvoir se déplacer dans la direction d'avance (A) et dans une direction de recul (B) opposée à la direction d'avance (A), la machine (100) comprenant une unité d'actionnement (9) destinée à provoquer le déplacement de l'ensemble de soudage et de découpe transversaux (6) dans la direction d'avance (A) et dans la direction de recul (B), **caractérisée en ce que** les enrouleurs (4.1, 4.2) et la zone de réception (1.9) de l'unité de convoyage de sortie (1) sont associés à l'ensemble de soudage et de découpe transversaux (6) de manière à se déplacer conjointement avec l'ensemble de soudage et de découpe transversaux (6) dans la direction d'avance (A) et dans la direction de recul (B), la machine (100) comprenant une unité de commande (101) configurée pour commander au moins le déplacement de l'ensemble de soudage et de découpe transversaux (6), des enrouleurs (4.1, 4.2) et de la zone de réception (1.9) dans la direction d'avance (A) et dans une direction de recul (B) opposée à la direction d'avance (A), l'unité de commande (101) étant configurée pour amener l'ensemble de soudage et de découpe transversaux (6), les enrouleurs (4.1, 4.2) et la zone de réception (1.9) de l'unité de convoyage de sortie (1) à commencer un mouvement conjoint dans la direction de recul (B) lorsque le produit (P) entre en contact avec un rideau de film (3.3) formé par une soudure transversale entre un premier film (3.1) et un deuxième film (3.2), ou avant un tel contact, et à terminer le mouvement conjoint lorsque le produit (P) est disposé en aval des outils de soudage et de découpe (6.1, 6.2) de l'ensemble de soudage et de découpe transversaux (6) dans la direction d'avance (A), ou lorsque l'ensemble de soudage et de découpe transversaux (6) parcourt une distance prédéterminée.

2. Machine d'emballage de produits selon la revendication 1, dans laquelle l'unité de convoyage de sortie (1) comprend au moins une pluralité d'éléments de support (1.1) et une bande transporteuse (1.2) supportée par lesdits éléments de support (1.1), la zone de réception (1.9) de l'unité de convoyage de sortie (1) comprenant au moins l'élément de support (1.1) le plus proche de l'ensemble de soudage et de découpe transversaux (6).

3. Machine d'emballage de produits selon la revendication 1 ou 2, comprenant une unité de convoyage d'entrée (7) configurée pour convoyer un produit (P) dans la direction d'avance (A) et agencée en amont de l'ensemble de soudage et de découpe transversaux (6) dans la direction d'avance (A), l'unité de convoyage d'entrée (7) comprenant une zone d'alimentation (7.9), la zone d'alimentation (7.9) étant associée à l'ensemble de soudage et de découpe transversaux (6) de manière à se déplacer conjointement avec l'ensemble de soudage et de découpe transversaux (6) dans la direction d'avance (A) et dans la direction de recul (B).

4. Machine d'emballage de produits selon la revendication 3, dans laquelle l'unité de convoyage d'entrée (7) comprend au moins une pluralité d'éléments de support (7.1) et une bande transporteuse (7.2) supportée par lesdits éléments de support (7.1), la zone d'alimentation (7.9) comprenant au moins l'élément de support (7.1) le plus proche de l'ensemble de soudage et de découpe transversaux (6).

5. Machine d'emballage de produits selon la revendication 3 ou 4, dans laquelle l'ensemble de soudage et de découpe transversaux (6) est agencé dans un espace libre (300) de la machine (100) entre l'unité de convoyage de sortie (1) et l'unité de convoyage d'entrée (7).

6. Machine d'emballage de produits selon l'une quelconque des revendications 1 à 5, dans laquelle chaque enrouleur (4.1, 4.2) comprend un rouleau d'entraînement (4.11, 4.21) et un rouleau de support (4.12, 4.22) entre lesquels le film respectif (3.1, 3.2) est déplacé, ainsi qu'un actionneur respectif (4.13, 4.23) associé au rouleau d'entraînement correspondant (4.11, 4.21) afin de provoquer la rotation des rouleaux d'entraînement (4.11, 4.21) lors de son actionnement et ainsi d'entraîner les films (3.1, 3.2).

7. Machine d'emballage de produits selon la revendication 6, dans laquelle l'unité de commande (101) est configurée pour provoquer l'actionnement simultané des actionneurs (4.13, 4.23) pendant le déplacement de l'outil de soudage et de découpe transversal (6) dans la direction de recul (B).

8. Machine d'emballage de produits selon l'une quelconque des revendications 1 à 7, comprenant une structure mobile (8), l'ensemble de soudage et de découpe transversaux (6) étant fixé à la structure mobile (8) et l'unité d'actionnement (9) étant configurée pour agir sur la structure mobile (8) afin de provoquer le déplacement de l'ensemble de soudage et de découpe transversaux (6), les enrouleurs (4.1, 4.2) étant de préférence fixés à la structure mobile (8).

9. Machine d'emballage de produits selon la revendication 8, dans laquelle la zone (1.9, 7.9) d'une unité de convoyage (1, 7) qui se déplace avec l'ensemble de soudage et de découpe transversaux (6) est fixée à la structure mobile (8).

10. Machine d'emballage de produits selon la revendication 8 ou 9, dans laquelle les outils de soudage et de découpe (6.1, 6.2) de l'ensemble de soudage et de découpe transversaux (6) sont fixés à la structure mobile (8), au moins l'un desdits deux outils de soudage et de découpe (6.1, 6.2) étant fixé à ladite structure mobile (8) avec possibilité de déplacement vertical, et les enrouleurs (4.1, 4.2) étant fixés à la structure mobile (8) de manière que lesdits enrouleurs (4.1, 4.2) se déplacent conjointement avec la structure mobile (8).

11. Procédé de fonctionnement d'une machine d'emballage de produits, dans lequel un produit (P) à emballer est acheminé dans une direction d'avance (A) vers une unité de convoyage de sortie (1) de la machine (100), de telle sorte que, pendant son déplacement, le produit (P) est au moins partiellement emballé avec un rideau de film (3.3) formé par une soudure transversale entre un premier film (3.1) et un deuxième film (3.2) ; le premier film (3.1) est entraîné par un premier enrouleur (4.1) et le deuxième film (3.2) est entraîné par un deuxième enrouleur (4.2), pendant que le produit (P) est emballé ; et les deux films (3.1, 3.2) sont soudés transversalement ensemble et découpés transversalement en amont du produit emballé (P) au moyen d'un outil de soudage et de découpe transversal (6) de la machine (100) comprenant un premier outil de soudage et de découpe (6.1) et un deuxième outil de soudage et de découpe (6.2) disposés face à face, de sorte qu'en amont de la découpe, un nouveau rideau de film (3.3) est généré avec les films (3.1, 3.2) soudés ensemble et qu'en aval de la découpe, on obtient un produit (P) emballé entre les deux films (3.1, 3.2), soudés transversalement ensemble en amont et en aval dudit produit (P) dans la direction d'avance (A), **caractérisé en ce que** le procédé comprend en outre le déplacement conjoint, dans une direction de recul (B) opposée à la direction d'avance (A), de l'ensemble de soudage et de découpe transversaux (6), des enrouleurs (4.1, 4.2) et d'une zone de réception (1.9) de l'unité de convoyage de sortie (1) qui reçoit ledit produit (P) pendant le déplacement dudit produit (P) dans la direction d'avance (A), les outils de soudage et de découpe (6.1, 6.2) de l'ensemble de soudage et de découpe transversaux (6) étant séparés et ne coopérant pas l'un avec l'autre ; la fermeture desdits outils de soudage et de découpe (6.1, 6.2) de manière qu'ils coopèrent l'un avec l'autre, l'ensemble de soudage et de découpe transversaux (6) étant en amont du produit (P) dans la direction d'avance (A) ; et le déplacement conjoint, dans la direction d'avance (A), de l'ensemble de soudage et de découpe transversaux (6), des enrouleurs (4.1, 4.2) et de la zone de réception (1.9) de l'unité de convoyage de sortie (1), les outils de soudage et de découpe (6.1, 6.2) de l'ensemble de soudage et de découpe transversaux (6) étant fermés au moins au début dudit déplacement, dans lequel l'ensemble de soudage et de découpe transversaux (6), les enrouleurs (4.1, 4.2) et la zone de réception (1.9) de l'unité de convoyage de sortie (1) commencent leur mouvement conjoint dans la direction de recul (B) lorsque le produit (P) entre en contact avec le rideau de film (3.3), ou avant un tel contact, et terminent leur mouvement conjoint lorsque le produit (P) est disposé en aval des outils de soudage et de découpe (6.1, 6.2) de l'ensemble de soudage et de découpe transversaux (6) dans la direction d'avance (A), ou lorsque l'ensemble de soudage et de découpe transversaux (6) parcourt une distance prédéterminée.

12. Procédé de fonctionnement selon la revendication 11, dans lequel les enrouleurs (4.1, 4.2) sont commandés de manière à entraîner le film correspondant (3.1, 3.2) depuis le début du déplacement des enrouleurs (4.1, 4.2) dans la direction d'avance (A) jusqu'à ce que le produit (P) soit disposé en aval de l'ensemble de soudage et de découpe transversaux (6) dans la direction d'avance (A), lesdits enrouleurs (4.1, 4.2) étant ensuite arrêtés.

13. Procédé de fonctionnement selon la revendication 11 ou 12, dans lequel les enrouleurs (4.1, 4.2) sont commandés de manière à entraîner le film correspondant (3.1, 3.2) à une vitesse égale ou supérieure à la somme de la vitesse de déplacement des enrouleurs (4.1, 4.2) dans la direction de recul (B) et de la vitesse du produit (P) dans la direction d'avance (A).

14. Procédé de fonctionnement selon l'une quelconque des revendications 11 à 13, dans lequel est provoqué un déplacement conjoint, avec l'ensemble de soudage et de découpe transversaux (6), les enrouleurs (4.1, 4.2) et la zone de réception (1.9) de l'unité de convoyage de sortie (1), dans la direction d'avance (A) et dans la direction de recul (B), d'une zone d'alimentation (7.9) d'une unité de convoyage d'entrée (7) depuis laquelle le produit (P) est alimenté vers l'unité de convoyage de sortie (1).
